# DEMANDE DE BREVET EUROPEEN

(11) **EP 1 005 206 A1**
(43) Date de publication de la demande: **31.05.2000**
(21) Numéro de dépôt: 99402870.2
(22) Date de dépôt: 19.11.1999
(51) Int. Cl.: H04L 29/06

(54) **Système multimédia de transmission de données**

(30) Priorité: 23.11.1998 FR 9814719
(71) Demandeur: Net Centrex, 14000 Caen (FR)
(72) Inventeur: Hersent, Olivier, 14000 Caen (FR)
(74) Mandataire: Ilgart, Jean-Christophe

(57) **Abrégé**

La présente invention concerne un système multimédia de transmission de donées comportant un réseau étendu (10), dont on ne maîtrise pas la confidentialité et la sécurité de bout en bout, sur lequel sont connectés un serveur central (11) de ressources vocale et/ou vidéo partagées destiné à fournir un service dynamique à au moins un usager, et au moins un serveur de contrôle d'appel (16,17,18) situé chez chaque fournisseur de service.

## Description

### Domaine technique

La présente invention concerne un système multimédia de transmission de données.

### Etat de la technique antérieure

Les serveurs multimédia classiques sont des serveurs conçus pour être hébergés par une plate-forme unique. Le plus souvent il s'agit simplement d'une application qui tourne sur un ordinateur muni de cartes d'interfaces avec le réseau téléphonique.

Dans sa forme la plus distribuée, un serveur central est capable de venir chercher des données sur des serveurs de données externes accessibles sur le même réseau local, via des protocoles de type RPC (« Remote procedure Call » ou « appel de procédure éloignée ») ou ODBC (« Open DataBase Connectivity » ou « connectivité de base de données ouverte »).

Une telle structure est bien adaptée à l'hébergement de serveurs multimédia simples dans lesquels aucune information n'est dynamique. L'entreprise, qui désire faire héberger un serveur, décrit la logique du service souhaité (« si l'utilisateur tape #1, alors dire « vous avez bien tapé le 1... ») de manière statique, et cette logique tourne de manière autonome sur la plate-forme d'hébergement du fournisseur de services.

En revanche, lorsqu'une application demande des informations qui requièrent une intégration étroite avec une base de données vitale de l'entreprise (états de réservation, ...), il devient impossible de l'héberger et il faut que l'entreprise s'équipe de sa propre infrastructure.

Or, de plus en plus d'entreprises souhaitent intégrer étroitement un tel service multimédia avec les données internes de leur processus industriel. Il s'agit de dire en temps réel au client si le billet qu'il vient d'acheter est disponible, la valeur de son portefeuille d'actions, etc.. Il s'agit de données dynamiques qui ne sont disponibles qu'au sein de l'entreprise.

Les services d'hébergement multimédia classiques ne sont pas en mesure de répondre à une telle demande, ce qui oblige les entreprises demandeuses à installer leur propre serveur, avec les investissements associés (central téléphonique privé, lignes téléphoniques, ...).

Pour pallier aux inconvénients de tels serveurs, l'invention propose un système multimédia de transmission de données, dont le but est de fournir un service de type multimédia aux entreprises désirant obtenir un service dynamique, sans imposer aucun achat de matériel à l'entreprise et de permettre à l'entreprise d'avoir un serveur accessible au moyen de plusieurs technologies (notamment à partir du réseau téléphonique, et à partir du réseau Internet) de manière totalement transparente pour la logique du service.

### Exposé de l'invention

Le système de l'invention concerne un système multimédia de transmission de données, caractérisé en ce qu'il comporte un réseau étendu, dont on n'en maîtrise pas la confidentialité et la sécurité de bout en bout, sur lequel sont connectés un serveur central de ressources vocale et/ou vidéo partagées destiné à fournir un service dynamique à au moins un usager, et au moins un serveur de contrôle d'appel situé chez chaque fournisseur de service.

Avantageusement le serveur central, relié au réseau par une interface, est composé de cinq sous-systèmes :
- Un sous-système pile protocolaire dont une interface permet de :
   - recevoir des appels au standard du réseau de données ;
   - détecter les appels entrants et capturer les numéros demandeur et demandé ;
   - détecter les tonalités ;
   - générer des flux média de codages-décodages arbitraires ;
   - recevoir des flux média de codages-décodages arbitraires.
- Un sous-système interpréteur de commandes capable de :
   - générer des messages de détection de nouvel appel à destination d'un serveur de contrôle d'appel placé chez un client ;
   - générer des messages d'événements ;
   - mettre en oeuvre les commandes en provenance des serveurs de contrôle d'appel placés chez les clients, tels que :
      * ordre de jouer un fichier audio ou vidéo préenregistré,
      * ordre de synthétiser un message vocal à partir d'un texte,
      * ordre de se mettre en attente de tonalité,
      * ordre de déconnecter l'appel,
      * ordre de reconnaissance vocale ou autre application.
- Un sous-système ressource de transcodage haute performance.
- Un sous-système ressource de synthèse vocale et/ou vidéo.
- Un sous-système module d'enregistrement/restitution de séquences audio et vidéo.

Avantageusement chaque serveur de contrôle d'appel placé chez un client est un logiciel qui reçoit les événements signalés par le serveur central et émet des commandes en réaction à ces événements. Ce logiciel peut tourner sur un ordinateur muni de deux interfaces réseau, l'une connectée au réseau étendu pour communiquer avec le serveur central, l'autre connectée à un réseau privé de l'entreprise afin de dialoguer avec les bases de données et autres processus industriels du client.

Il est ainsi possible de fournir un service d'« hébergement » de nouvelle génération, où l'ensemble des ressources chères (cartes de synthèse vocale, ...) sont partagées, le client gardant la maîtrise de l'application et pouvant l'interfacer avec les ressources qu'il souhaite.

### Brève description des dessins

- La figure 1 illustre un premier mode de réalisation de l'invention ;
- la figure 2 illustre le dialogue entre un serveur opérateur avec reconnaissance vocale et le serveur d'une entreprise A ;
- la figure 3 illustre un exemple de procédure de reconnaissance vocale ;
- la figure 4 illustre un mode de réalisation d'une page spécialisée qui réagit à la voix.

### Exposé détaillé d'un mode de réalisation

L'invention concerne un système multimédia de transmission de données qui comporte un réseau étendu éventuellement public, dont on ne maîtrise pas la confidentialité et la sécurité de bout en bout, sur lequel sont connectés un serveur central de ressources vocale et/ou vidéo partagées destiné à fournir un service dynamique à au moins un client, et au moins un serveur de contrôle d'appel situé chez chaque client.

L'invention consiste à placer dans le réseau étendu une ressource vocale (capable de restituer des fichiers audio, de les enregistrer, de faire de la synthèse ou reconnaissance vocale, de détecter des tonalités DTMF (« Dual Tone Multifrequency » ou « multiplication de fréquence à partir de deux sons »)), munie d'un protocole sécurisé qui permet de la télécommander à distance à travers un réseau étendu (tel le réseau Internet).

L'application qui contrôle cette ressource vocale peut être située n'importe où sur le réseau. Ainsi le serveur est une plate-forme distribuée, où les ressources coûteuses se trouvent dans le réseau, et la logique du service (purement logicielle) se trouve chez le client.

L'invention permet donc de partager le serveur de ressource vocale situé dans le réseau d'un opérateur entre plusieurs clients qui exécutent la logique du service dans leurs locaux. Les entreprises doivent seulement disposer d'une connexion vers le réseau de données. Le serveur opérateur est accessible soit à partir des postes multimédias connectés sur le réseau de données, soit à partir de tout téléphone par l'intermédiaire d'une passerelle.

Grâce à l'invention, le fournisseur du service d' « hébergement » fournit un logiciel de contrôle d'appel à ses clients, qui le font tourner en local sur une machine de leur réseau, et l'interfacent avec leurs bases de données critiques.

Lorsqu'un appel arrive pour ce client, il aboutit à la plate-forme de ressource vocal partagée. Cette plate-forme analyse le numéro demandé ou l'« ALIAS » pour les appels IP (INTERNET PROTOCOL) et en déduit le client concerné. Elle envoie, via le réseau étendu, une notification de nouvel appel à l'application de contrôle d'appel du client concerné. Cette application peut notamment demander en retour :
- de jouer un fichier audio préenregistré ;
- de synthétiser un texte ;
- d'enregistrer un texte ;
- de demander l'envoi d'une séquence vidéo si la personne connectée possède un terminal adéquat ;
- de réaliser une reconnaissance vocale.

On peut réaliser la ressource vocale au-dessus du protocole H.323 afin de pouvoir indifféremment connecter des utilisateurs du réseau téléphonique commuté RTC (via une passerelle RTC/IP) ou du réseau Internet.

Dans un mode de réalisation avantageux le serveur central, relié au réseau étendu par une interface Ethernet ou autre, est composé de cinq sous-systèmes :
- Un premier sous-système, qui est une pile de protocole H.323, dont l'interface API (« Application Programming Interface » ou « interface de programmation d'application ») permet :
   - de détecter les appels entrants et capturer les numéros (ou ALIAS H.323) demandeur et demandé ;
   - de détecter les tonalités DTMF (transportées dans le protocole H.245) ;
   - de générer des flux média (son + vidéo) de codages-décodages arbitraires ;
   - de recevoir des flux média (son + vidéo) de codages-décodages arbitraires.
- Un éventuel second sous-système, qui est une ressource de transcodage haute performance, typiquement une carte à processeur de signaux numériques capable de transcoder les protocoles G.711/G.723.1.
- Un éventuel troisième sous-système, qui est une ressource de synthèse vocale générant des flux de type G.711 ou G.723.1, éventuellement avec des capacités de « streaming » (division d'un gros fichier en petits éléments successifs de durée limitée).
- Un éventuel quatrième sous-système, qui est un module d'enregistrement/restitution de séquences audio et vidéo, avec des fonctionnalités de « streaming » lors de la restitution.

L'action de ces sous-systèmes est coordonnée par un cinquième sous-système, qui est essentiellement un interpréteur de commandes capable de :
- générer des messages de détection de nouvel appel à destination d'un serveur de contrôle d'appel placé chez un client ; il doit également choisir le bon serveur de contrôle d'appel à partir du numéro demandé ;
- générer des messages d'événements, correspondant à des tonalités DTMF par exemple ;
- mettre en oeuvre les commandes en provenance des serveurs de contrôle d'appel placés chez les clients, tels que :
   * ordre de jouer un fichier audio ou vidéo préenregistré,
   * ordre de synthétiser un message vocal à partir d'un texte,
   * ordre de se mettre en attente de tonalité DTMF,
   * ordre de déconnecter l'appel,
   * ordre de reconnaissance vocale ou autre application.

Les appels en provenance du réseau téléphonique commuté sont traduits par une passerelle réseau RTC/H.323 pour être traités par le serveur central. Eventuellement la fonction de passerelle peut être intégrée au serveur central.

D'autres sous-systèmes (reconnaissance vocale, génération/réception de fax ...) peuvent être ajoutés pour augmenter la richesse fonctionnelle de l'ensemble.

Dans un mode de réalisation avantageux le serveur de contrôle d'appel placé chez le client est un simple logiciel (service « Windows NT » par exemple) qui reçoit les événements signalés par le serveur central et émet des commandes en réaction à ces événements. Ce logiciel peut tourner sur un ordinateur muni de deux interfaces réseau, l'une connectée au réseau Internet pour communiquer avec le serveur central, l'autre connectée à un réseau privé de l'entreprise, afin de dialoguer avec les bases de données et autres processus industriels de l'entreprise.

L'ordinateur hôte est configuré pour ne pas transmettre les paquets IP venant du réseau Internet vers le réseau interne.

La logique du service lui-même est configurable par le client grâce à un langage de script (par exemple Java Script, VisualBasic) ou une interface graphique.

Le protocole de dialogue peut être tout protocole de dialogue sécurisé à faible latence. Dans un mode de réalisation, on utilise un protocole sur standard UDP, ou chaque bloc d'information envoyé est de la forme :
<bloc><alea>64bits aléatoires</alea><cipherblock>
données chiffrées</cipherblock> </block> le bloc d'informations chiffrées doit avoir la structure suivante une fois déchiffré :
<clearinfo>
<serial>numéro de série</serial>
<autresinformations> ... </autres informations>
</clearinfo>

Les informations chiffrées dans le bloc « cipherblock » sont obtenues en chiffrant la structure « clearinfo » avec le standard DES (« Data Encryption Standard » ou « standard de cryptage de données ») en mode CBC (« Cipher Block Chaining » ou « chainage de bloc de chiffrage ») en utilisant les 64 bits aléatoires pour le OU exclusif initial. L'identité de l'émetteur est prouvée par la possibilité de retrouver un message intelligible avec déchiffrage. Le récepteur doit mémoriser le dernier numéro de série reçu de l'émetteur et jeter tout message reçu avec un numéro de série inférieur ou égal au numéro de série courant.

L'émetteur peut sécuriser son émission (standard UDP) en envoyant plusieurs messages identiques. Le récepteur mémorise le numéro de série du premier message reçu correctement et jette les suivants sans examen.

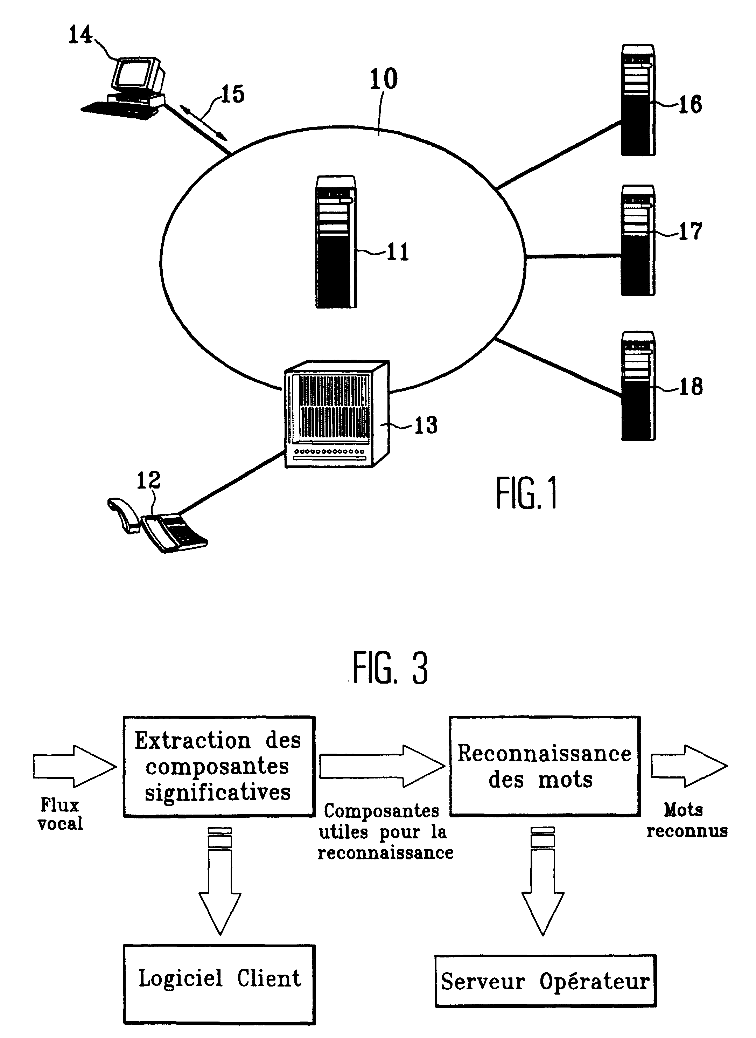

La figure 1 illustre un premier exemple d'utilisation qui est celui d'une communication d'un serveur vocal interactif IP.

Un réseau étendu (réseau WAN) 10, par exemple Internet, dans lequel est situé le serveur 11 de l'opérateur de ressources vocales et/ou vidéo est relié à :
- un téléphone ordinaire 12 par l'intermédiaire d'une passerelle téléphone réseau WAN 13 ;
- un poste multimédia 14 par l'intermédiaire d'une liaison dans les deux sens 15, de type flux vocal H.323, SIP ou autre ;
- à trois serveurs 16, 17 et 18 d'entreprises A, B et C.

Lorsque le serveur de l'opérateur 11 reçoit une nouvelle communication d'un utilisateur, dans un premier temps il analyse le numéro demandé et en déduit quel est le serveur entreprise qui doit gérer la communication : par exemple le serveur 16 de l'entreprise A.

L'entreprise A effectue de la commande rapide de pièces. Le serveur 16 envoie son annonce d'accueil stockée dans le fichier accueil du serveur opérateur 11 : « bienvenue sur le serveur de commande rapide de l'entreprise A, appuyez sur la touche '*' pour commencer ». Les utilisateurs avertis peuvent interrompre cette annonce en appuyant la touche '*'.

Dès que l'utilisateur appuie sur '*', le serveur opérateur 11 prévient le serveur 16 de l'entreprise A avec un message « événement DTMF ». Le serveur 16 de l'entreprise A commande alors de jouer le fichier « voulez_vous_commander », qui contient un enregistrement de cette phrase.

Le serveur 16 de l'entreprise A décide d'utiliser la commande vocale, et commande au serveur opérateur 11 de démarrer la reconnaissance sur le vocabulaire « oui, non ». Dès que l'utilisateur dit « oui », le serveur 16 en est prévenu par un message « Mot_reconnaissance ».

Le serveur 16 demande alors combien de pièces le client veut commander, et enregistre ce nombre par reconnaissance vocale. Puis il arrête la procédure de reconnaissance vocale par une commande « Stop_reconnaissance ».

Enfin le serveur 16 rappelle au client le montant de sa commande en demandant au serveur opérateur 11 de synthétiser la chaîne de caractères « Vous avez commandé trois pièces ». Puis l'utilisateur raccroche.

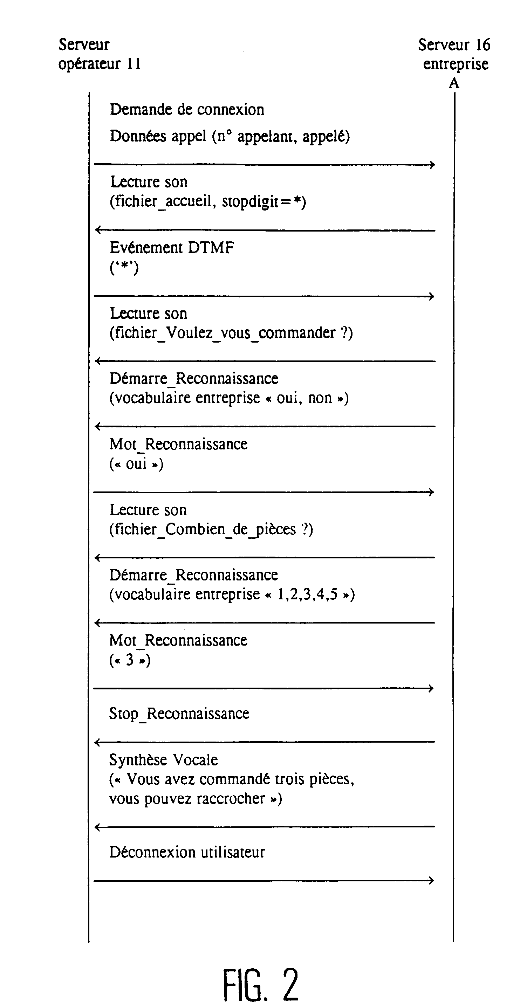

Le dialogue entre le serveur opérateur 11 avec reconnaissance vocale qui reçoit un flux vocal H.323 SIP ou autre et le serveur 16 de l'entreprise A est illustré sur la figure 2 :

Les procédures de reconnaissance vocale comprennent en général deux parties :
- la première (A) prend le flux vocal (64 kbits pour le standard G.711 et 6,4 kbits pour le standard G.723.1) et en extrait les composantes significatives (spectre, etc...), il en résulte un flux de données de débit faible, entre 4 et 8 kbits/s ;
- la seconde (B) tente de reconnaître des mots parmi un vocabulaire à partir des composantes transmises par la première partie A.

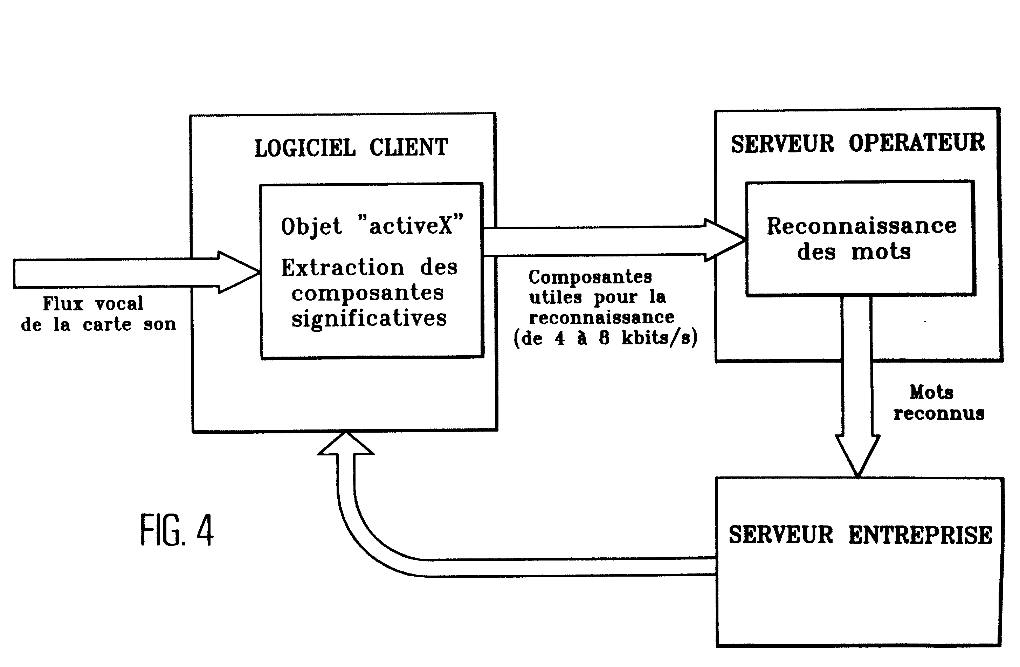

Le schéma illustré sur la figure 3 montre comment les différents modules d'une procédure de reconnaissance vocale communiquent entre eux.

Pour réaliser une procédure de reconnaissance vocale dans le serveur interactif IP, il est possible de procéder de deux manières :
- Lorsque le client qui appelle le serveur entreprise n'est pas maîtrisé par l'opérateur du réseau, il faut mettre les composantes A et B sur le serveur opérateur. C'est cette méthode qui est utilisée dans l'exemple ci-dessus.
- En revanche si l'opérateur réseau le peut, il a intérêt à effectuer l'extraction des composantes significatives chez le client, afin d'utiliser moins de bande passante sur le réseau entre le client et le serveur opérateur. Cette phase d'extraction nécessite peu de puissance de calcul.

Par exemple si le client est un logiciel de téléphonie IP, le module d'extraction des composantes significatives peut apparaître comme un nouveau codeur de parole. Le serveur opérateur négocie alors avec le client l'utilisation de ce codeur lors de la connexion.

Une autre réalisation possible est de mettre dans une page spécialisée HTML visualisée un composant logiciel (ActiveX ou Java) qui se charge de s'interfacer avec les ressources vocales du poste client et n'envoie que les composantes significatives du flux vocal vers le serveur opérateur. On peut ainsi réaliser une page spécialisée qui réagit à la voix, comme dans l'exemple sur la figure 3.

La figure 4 illustre un autre exemple de réalisation possible avec le serveur audiotel IP d'une page spécialisée qui réagit à la voix.

Dans cet exemple de réalisation, le client est un objet logiciel (« ActiveX ou Java ») intégré dans une page spécialisée. Cet objet envoie les composantes significatives du flux vocal saisi sur l'ordinateur du poste client vers le serveur opérateur. Sur réseau IP il peut pour cela utiliser le protocole RTP, ou bien simplement le protocole TCP si le temps de réaction n'est pas une contrainte majeure.

Le serveur opérateur se charge de reconnaître les mots dans ce flux et notifie les mots reconnus au serveur entreprise.

Le serveur entreprise déclenche alors des actions en fonction des mots reconnus. Par exemple, il peut envoyer un message de commande au composant ActiveX pour visualiser une autre page spécialisée.

Le protocole utilisé peut être le suivant :
1. Demande de connexion : Message de demande connexion (serveur opérateur => serveur entreprise)
   (Implicite en TCP/IP par l'ouverture du mécanisme d'échange en TCP/IP)
2. Données d'appel : Transmission des données d'appels (serveur opérateur => serveur entreprise)
   Numéro appelé
   Numéro appelant
3. Lecture son : Lecture d'un fichier son (serveur entreprise =>serveur opérateur)
   Numéro de la voie logique
   Nom de l'élément à qui notifier la réponse
   Délai en ms avant de jouer le son
   Nom du fichier à jouer
   Digit permettant de détecter la fin du fichier son
   Format du fichier son (Wav, Vox, ADPCM...)
   Format des données
   Fréquence d'échantillonnage
4. Message événement DTMF (serveur opérateur => serveur entreprise)
   Numéro de la voie logique
   Code de la Touche DTMF
5. Enregistrement son : Enregistrement d'un message (serveur entreprise => serveur opérateur)
   Numéro de la voie
   Nom de l'élément à qui notifier la réponse
   Délai avant de commencer l'enregistrement
   Nom du fichier de sauvegarde du message
   Caractère de fin d'enregistrement
   Délai maximum d'enregistrement
   Durée maximum de silence
   Format du fichier d'enregistrement
   Format des données
   Fréquence d'échantillonnage
   Diffusion d'un bip signalant le début de l'enregistrement
6. Emission tonalité : Emission d'une tonalité (serveur entreprise => serveur opérateur)
   Voie
   Nom de l'élément à qui notifier la réponse
   DélaiAvant
   Type Tonalité
   Fréquence 1
   Fréquence 2
   Amplitude 1
   Amplitude 2
   Durée de la tonalité
7. Lecture chaîne : Concaténation d'une chaine de caractères
   (serveur entreprise => serveur opérateur)
   Numéro de la voie logique
   Nom de l'élément à qui notifier la réponse
   Temporisation avant lecture son
   Chaîne de caractères devant faire l'objet de la conversion données => son
   Chaîne de caractères de fin de fichier
   Format du fichier son (Wav, Vox, ADPCM...)
   Format des données
   Format de la fréquence d'échantillonnage
   Taille mixage, qui permettra ultérieurement le mixage entre deux fichiers (Transition en douceur)
   Type de Découpe, qui permettra ultérieurement des fonctions du type génération de nombre à partir d'une bibliothèque de son.
   Caractère séparateur des expressions de la chaîne de caractères.
   Nom du fichier résultat de la concatégnation.
   Nom Champ Mot
   Nom Champ Son
   Chemin d'accès au dictionnaire
8. Déconnexion utilisateur : L'appelant s'est déconnecté (serveur opérateur => serveur entreprise)
   Numéro de la voie logique à déconnecter.
   (Implicite en TCP/IP par la fermeture du mécanisme d'échange en TCP/IP)
9. Déconnexion serveur : Demande de déconnexion par le logiciel serveur entreprise.
   (serveur entreprise => serveur opérateur)
   Numéro de la voie logique à déconnecter
10. Synthèse vocale :
   Numéro de la voie logique
   Nom de l'élément à qui notifier la réponse
   Texte à convertir en synthèse vocal
   Choix éventuel d'une voix précise
   Vitesse d'élocution
   Fréquence d'élocution
      ...
11. Appel étendu (fonction de demande de transfert d'appel)
   Numéro de la voie logique.
   Nom de l'élément à qui notifier la réponse
   Délai en demande de transfert
   Numéro vers lequel transférer l'appel.
   Type d'appel
   Nombre de sonneries avant abandon
   Délai d'analyse du résultat de la demande de transfert
12. Démarre reconnaissance (fonction de demande de début de reconnaissance vocale) Numéro de la voie logique
   Nom de l'élément à qui notifier la réponse
   Nom du fichier des mots à analyser
   Digit permettant de détecter la fin du fichier son
   Délai maximum d'enregistrement
   Durée maximum de silence
   Diffusion d'un « bip » signalant le début de l'enregistrement
13. Stop reconnaissance (fonction de demande de début de reconnaissance vocale)
   Numéro de la voie logique
14. Mot reconnaissance (fonction de demande de début de reconnaissance vocale)
   Numéro de la voie logique
   Nom de l'élément à qui notifier la réponse
   Liste de mots reconnus

On va, à présent, donner une description de plusieurs autres exemples de réalisation.
- *Appel à partir du réseau téléphonique*
   Une personne intéressée par la réservation d'un voyage appelle le 0836011234. Ce numéro aboutit en fait à une passerelle réseau RTC/H.323 qui convertit l'appel en données IP et le fait aboutir sur le serveur central de ressources vocales.
   Le serveur de ressources vocales analyse le numéro demandé et en déduit que le contrôle d'appel doit être effectué par le serveur de contrôle d'appel situé à l'adresse IP 192.12.13.14 (situé dans l'entreprise du voyagiste).
   Il envoi donc un message de nouvel appel vers le serveur de contrôle d'appel dans l'entreprise du voyagiste. Ce serveur de contrôle d'appel lui demande de jouer un fond musical présentant rapidement la société et demandant de taper le « 1 » pour réserver un voyage, le « 2 » pour laisser un message.
   La personne tape le « 1 », et le serveur central de ressources vocales retransmet l'événement au serveur de contrôle d'appel du voyagiste.
   Le dialogue se poursuit. On peut imaginer que le réserviste souhaite donner le prix d'un voyage particulier. Le serveur de contrôle d'appel regarde dans la base de donnée du voyagiste les prix et les disponibilités, et demande au serveur central de ressources vocales de jouer la chaîne préenregistrée « le prix de votre voyage est », puis de synthétiser « 2345 » puis de jouer « Francs ».
- *Appel à partir du réseau Internet*
   A partir du site Internet d'un voyagiste, un terminal H.323 clique sur un lien qui provoque l'appel du terminal H.323 vers le serveur central H.323. Le serveur analyse le numéro demandé et envoie l'indication de nouvel appel au serveur de contrôle d'appel du voyagiste.
   Le serveur de contrôle d'appel du voyagiste n'a pas a être modifié, et peut dérouler le même scénario que dans le cas précédent.
   Mais il peut aussi choisir d'offrir plus de services, car un élément de protocole lui indique, lors de l'indication de nouvel appel, que l'appel vient du réseau Internet, il peut suggérer d'aller voir telle ou telle page, ou même donner la commande au serveur central de jouer une séquence vidéo décrivant un voyage particulier.
   L'appel est gratuit pour l'utilisateur du réseau Internet.
- *Appel de l'étranger*
   Si l'opérateur a installé un autre serveur central de ressources vocales à l'étranger, le voyagiste peut être accessible de ce pays. Il suffit à l'opérateur de réserver un numéro, redirigé vers le serveur de ressources vocales local. Le serveur continue de contacter le serveur de contrôle d'appel de l'entreprise. Lors de l'indication de nouvel appel, la provenance de l'appel est indiquée, ainsi le serveur de contrôle d'appel peut le cas échéant s'adapter dynamiquement à la langue la mieux adaptée.
   Cette solution est beaucoup moins coûteuse qu'une solution classique, car elle ne nécessite aucune communication vocale internationale.

## Revendications

1. Système multimédia de transmission de données, caractérisé en ce qu'il comporte un réseau étendu (10), dont on ne maîtrise pas la confidentialité et la sécurité de bout en bout, sur lequel sont connectés un serveur central (11) de ressource vocale et/ou vidéo partagées destiné à fournir un service dynamique à au moins un usager, et au moins un serveur de contrôle d'appel situé chez chaque fournisseur de service.

2. Système selon la revendication 1, dans lequel le serveur central, relié au réseau par une interface, est composé de :
• Un sous-système pile protocolaire dont un interface permet de :
- recevoir des appels au standard du réseau de données,
- détecter les appels entrants et capturer les numéros demandeur et demandé,
- détecter les tonalités,
- générer des flux média de codages-décodages arbitraires,
- recevoir des flux média de codages-décodages arbitraires ;
• Un sous-système interpréteur de commandes capable de :
- générer des messages de détection de nouvel appel à destination d'un serveur de contrôle d'appel placé chez un client,
- générer des messages d'événements,
- mettre en oeuvre les commandes en provenance des serveurs de contrôle d'appel placés chez les clients.

3. Système selon la revendication 2 comprenant un sous-système ressource de transcodage haute performance.

4. Système selon la revendication 3 comprenant un sous-système ressource de synthèse vocale et/ou vidéo.

5. Système selon la revendication 4 comprenant un sous-système module d'enregistrement/ restitution de séquences audio et vidéo.

6. Système selon la revendication 1, dans lequel chaque serveur de contrôle d'appel placé chez un client est un logiciel qui reçoit les événements signalés par le serveur central et émet des commandes en réaction à ces événements.

7. Système selon la revendication 6, dans lequel ce logiciel tourne sur un ordinateur muni de deux interfaces réseau, l'une connectée au réseau étendu pour communiquer avec le serveur central, l'autre connectée à un réseau privé de l'entreprise afin de dialoguer avec les bases de données et autres processus industriels du client.
